# EUROPEAN PATENT SPECIFICATION

(11) **EP 2 938 681 B1**
(45) Date of publication and mention of the grant of the patent: **26.07.2017**
(21) Application number: 13826927.9
(22) Date of filing: 27.12.2013
(51) Int. Cl.: C09D 5/00

(54) **FLUID LEVEL SENSING TANK MATERIALS**
FLÜSSIGKEITSFÜLLSTANDERFASSENDE TANKMATERIALIEN
MATÉRIAUX POUR RÉSERVOIRS À DÉTECTION DU NIVEAU DE FLUIDE

(30) Priority: 31.12.2012 US 201213731627
(43) Date of publication of application: 04.11.2015
(73) Proprietor: Funai Electric Co., Ltd., Daito-shi Osaka 574-0013 (JP)
(72) Inventor: WEAVER, Sean T., Osaka 574-0013 (JP); MCREYNOLDS, Jason T., Osaka 574-0013 (JP); NICHOLSON, Marvin, Osaka 574-0013 (JP); PRESTON, Shawn, Osaka 574-0013 (JP)
(74) Representative: Manitz Finsterwald Patentanwälte PartmbB
(86) International application number: PCT/EP2013/078077
(87) International publication number: WO 2014/102344

(56) References cited:
- WO-A1-2008/098069
- WO-A1-2009/118552
- WO-A2-2006/008739
- WO-A2-2007/068760
- WO-A2-2010/071831
- US-A1- 2006 029 808

## Description

### CROSS REFERENCES TO RELATED APPLICATIONS

None.

### BACKGROUND

### 1. Field of the Disclosure

The present disclosure relates to micro-fluid ejection devices. More particularly, it relates to fluid level sensing tank used for inkjet printers.

### 2. Description of the Related Art

Emerging inkjet printer technologies separate the printheads from the ink supply to help reduce the cost for the consumer. With this separation, the ink supply item has to be smart or needs to have some form of identification to report to the printer and user, such as the information of what and how much ink it contains. This information is critical to the life and reliability of the printhead. For example, accurate ink level detection prevents "dry firing" of the printhead and also prevents air ingestion into the fluidic system. A typical ink level detection method consists of a dot/fire counting algorithm in firmware with an out of ink sensor to inform the system and user the status of ink supply. This firmware dot/fire counting method is an estimation based on the number of printhead fires and a fluid evaporation constant. This estimation is not as accurate as desired for permanent printheads, primarily due to drop size variation which may exceed by 20%.

Still other detection methods sense ink level by means of capacitors, optics, weight, ultrasound, magnets, floats, torque sensors, electrical probes, or the like. All these methods require either some form of external stimulus and/or a sensing mechanism. U.S. Patent Application No. 13/149,154 to Nicholson et al. discloses a closed system or a smart ink tank with the driving, sensing and capacitance measuring all contained on the supply item. There are challenges with this electrical and mechanical approach, such as requiring materials and chemical specifications to be well designed so that fluid level sensing method functions properly.

The chemical components of ink typically have properties that are best for print quality but not good for a quickly responsive fluid level measurement system. One component in particular is the level of surfactant found in inks. Surfactants lower the surface tension of liquids and act as a wetting agent. This component allows the ink to properly cling or stick to surfaces of printing medium (e.g. paper). However, this component is not good for any ink level detection method that requires fluid to roll off from surfaces quickly. If inks tend to cling or stick to tank material of ink supply item, the accuracy of the ink level measurement system will be affected.

The wettability of a solid surface by a liquid may be quantified by a contact angle. The higher the contact angle the less spreading/wetting of the liquid is on the surface. Generally, if the water contact angle is larger than 90°, the solid surface is considered hydrophobic. Highly hydrophobic surfaces made of low surface energy materials have water contact angles as high as about 120°. Super hydrophobic surfaces are highly rough surfaces having a water contact angle of greater than about 150°.

There is a need to achieve a balance between the tank material surface energy and ink chemistry to eliminate the problem with ink clinging to the tank material. Ink wetting characteristics may be modified by altering the type and concentration of surfactant in the ink composition. However, modification of the ink chemistry may lead to changes in print quality. The surface of the tank material may be made more hydrophobic to lower the surface energy, thus preventing the ink from clinging. A tank container with surface energy that balances with the ink chemistry is desired for an accurate ink level measurement system without compromising ink print quality.

### SUMMARY

Claim 1 provides a fluid tank for micro-fluid ejection devices. The fluid tank includes a plastic housing with an interior surface coating and at least one pair of opposed sensing elements disposed in the plastic housing to detect the fluid level. The interior surface coating has a highly hydrophobic to super hydrophobic surface with water contact angle of greater than about 120° and surface energy of less than about 20 mJ/m² The interior surface coating includes nanoparticles including metal oxides and hydrophobic materials including organic silanes that coat or encapsulate the nanoparticles. The interior surface coating can be formed by depositing a slurry of nanoparticles and hydrophobic solution on the interior surface of the housing or by depositing the nanoparticles, being formed from gas phase reaction, on the interior surface of housing, and encapsulating deposited nanoparticles with hydrophobic materials through chemical vapor deposition.

The interior surface coating of the fluid tank prevents fluid such as ink to stick or cling to the tank surface. The fluid tank is suitable as ink container having ink level measurement system. The fluid tank allows an accurate and quickly responsive ink level measurement system without compromising ink print quality.

### BRIEF DESCRIPTION OF THE DRAWINGS

The accompanying drawings incorporated in and forming a part of the specification, illustrate several aspects of the present disclosure, and together with the description serve to explain the principles of the present disclosure.
Figure 1 is a schematic view of a fluid tank.
Figure 2 is a cross-sectional view of the fluid tank along line 2 of Figure 1.
Figure 3 is a flowchart depicting a method of forming a surface coating according to one example embodiment.
Figure 4 is a flowchart depicting a method of forming a surface coating according to another example embodiment.
Figure 5A is a graphical illustration of water settling response time of uncoated polypropylene fluid tank.
Figure 5B is a graphical illustration of ink settling response time of uncoated polypropylene fluid tank.
Figure 5C is a graphical illustration of ink settling response time of coated polypropylene fluid tank.

### DETAILED DESCRIPTION

It is to be understood that the disclosure is not limited in its application to the details of construction and the arrangement of components set forth in the following description or illustrated in the drawings. The disclosure is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Further, the terms "a" and "an" herein do not denote a limitation of quantity, but rather denote the presence of at least one of the referenced item.

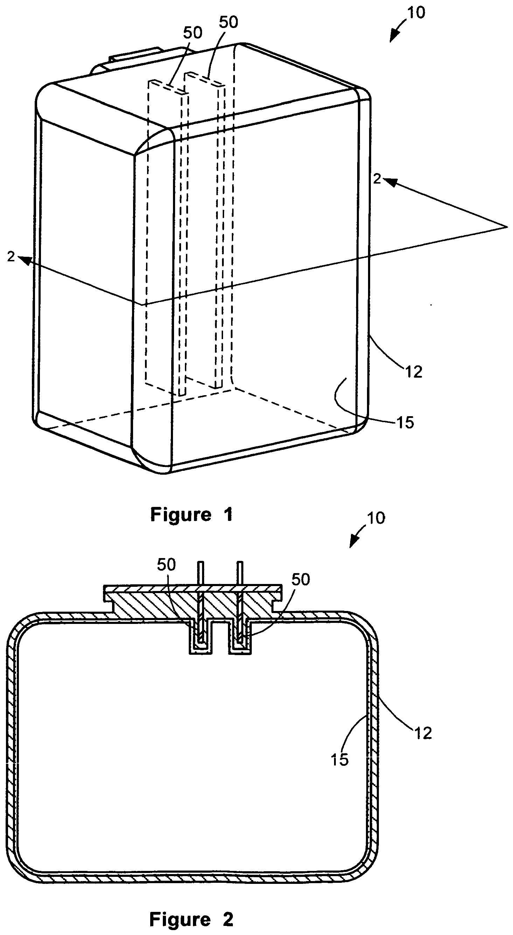

With reference to Figure 1, a fluid tank 10 to hold a volume of fluid includes a housing 12 with an interior surface coating 15. Figure 2 illustrates the cross-sectional view of the fluid tank 10 along line 2 of Figure 1 showing the interior surface coating 15 of the housing 12. The fluid may be any of a variety of inks, such as those based on dye or pigmented formulations, whether water-based or solvent-based. The ink typifies varieties of color, such as cyan, magenta, yellow, black, etc. The fluid tank 10 may be useful in many applications such as inkjet printing, medicinal delivery, forming circuit traces, food processing, chemical manufacturing, etc. The fluid tank 10, in this example embodiment is generally rectangular and sits vertically upright. A person skilled in the art knows that the fluid tank 10 may be shaped differently and be applied to fluid containers having different geometric configuration, such as but not limited to cylindrical fluid containers and oval fluid containers.

In one example embodiment, the fluid tank 10 includes at least one pair of opposed sensing elements 50 disposed in the housing 12 to detect a fluid level. The pair of opposed sensing elements 50 may include, but are not limited to, conductive plates whose capacitance varies upon the application of electrical energy according to an amount of liquid that exists between the plates. With greater amounts of fluid, the plates have a greater amount of capacitance. With lesser amount of fluid, the plates have a lesser amount of capacitance.

The housing 12 is made of plastic. Techniques for producing the housing 12 envision blow molding, injection molding, etc. as well as heat-staking, gluing, etc. Selecting the materials and designing the production, in addition to ascertaining conditions for shipping, storing, use, etc., includes further focusing on criteria, such as costs, ease of implementation, durability, leakage, and the like. In one example embodiment, the housing 12 comprises polypropylene. Polypropylene materials have a water contact angle of about 85° to about 92°. Water easily rolls off from polypropylene materials. However, ink tends to cling or adhere on polypropylene materials having a lower contact angle, which may be about 30° to about 60°. In another example embodiment, the housing 12 comprises polytetrafluoroethylene or derivatives containing fluorine groups. Polytetrafluoroethylene provides a more hydrophobic surface yielding a higher water or ink contact angle compared to polypropylene. However, polytetrafluoroethylene is relatively costly and has complex molding or processing related issues. In some other example embodiment, the housing 12 comprises a blend of polypropylene and polytetrafluoroethylene particles.

The interior surface coating 15 provide the housing 12 with a highly hydrophobic to super hydrophobic interior surface having a water contact angle of greater than about 120° and a surface energy of less than about 20 mJ/m². The interior surface coating 15 is constructed to have good adherence with the housing material while having a surface with high contact angle for the ink to repel. The interior surface coating 15 includes a single or multiple layers.

The interior surface coating 15 includes nanoparticles and hydrophobic material. The nanoparticles provide the interior surface of the housing 12 with texture and roughness, thus providing highly hydrophobic to super hydrophobic surfaces when combined with hydrophobic materials. Nanoparticles include metal oxides such as silica, alumina, titanium dioxide and tin oxide. Nanoparticles have particle sizes ranging from about 5 to about 100 nanometers (nm).

Hydrophobic materials include organic silanes. Examples of organic silanes are listed in Table 1 with their corresponding water contact angle when formed into film.

**TABLE 1**

| Self-assembled Monolayer Monomer | Water Contact Angle |
|---|---|
| Perfluorodecyltrichlorosilane (FDTS) | ∼109° |
| Perfluorooctyltrichlorosilane (FOTS) | ∼108° |
| Nonofluorohexyltrichlorosilane (NHTCS) | ∼98° |
| Pentafluorophenyltrichlorosilane (PFPTS) | ∼90° |
| n-Octyltrichlorosilane (n-Oct) | ∼100° |
| Pentafluorodecyltrichlorosilane | ∼114° |

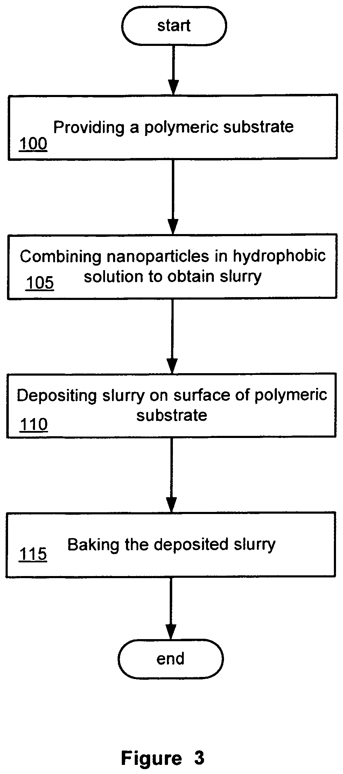

In one example embodiment, the interior surface coating 15 is formed through a surface coating method illustrated in Figure 3. In step 100, a polymeric substrate, like for example the housing 12 of the fluid tank 10, is provided for surface coating. In step 105, coating slurry is prepared by combining nanoparticles in hydrophobic solution. The concentration of nanoparticles in the coating slurry is about 5% to about 50% by weight. Hydrophobic solution comprises hydrophobic materials at concentration of about 1% to about 25% by weight in water and organic solvents. Organic solvents include, but are not limited to, alcohols. In step 110, the coating slurry is deposited on the surface of the polymeric substrate, like for example on the interior surface of the housing 10, through dipping, spraying, or spinning. In step 115, the deposited coating slurry is then baked to oligomerize the hydrophobic material and encapsulate the nanoparticles, thus obtaining a coating layer with highly hydrophobic to super hydrophobic surface, such as having a water contact angle of greater than about 140°.

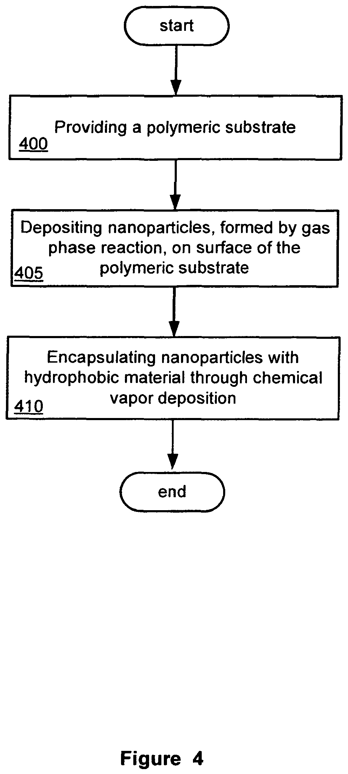

In another example embodiment, the interior surface coating 15 is formed through a surface coating method illustrated in Figure 4. In step 400, a polymeric substrate, like for example the housing 12 of the fluid tank 10, is provided in a deposition chamber for surface coating. In step 405, nanoparticles are deposited on surface of the polymeric substrate, like for example on the interior surface of the housing 10. The nanoparticles are formed by gas phase reaction before being deposited on surface of the polymeric substrate. For example, metal precursor and oxygen precursor are introduced in the deposition chamber. The metal precursor and oxygen precursor in gaseous form then reacts to form metal oxide nanoparticles. The metal oxide nanoparticles formed in the gas phase reaction are then deposited on the surface of the polymeric substrate. Example of metal oxide precursor includes trimethyl aluminum which forms aluminum oxide nanoparticles. Example of oxygen precursor includes water vapor. In step 410, deposited nanoparticles are then encapsulated with hydrophobic materials through chemical vapor deposition. The gas phase reaction and chemical vapor deposition are all performed in the same deposition chamber to obtain a coating layer with highly hydrophobic to super hydrophobic surface.

In particular, aluminum oxide nanoparticles formed through gas phase reaction of trimethyl aluminum and water vapor in deposition chamber are deposited on interior surface of the housing 12. The deposited aluminum oxide particles are then encapsulated with pentafluorodecyltrichlorosilane through chemical vapor deposition, still on the same deposition chamber. The formed interior surface coating 15 has a surface with water contact angle of about 150°. Pentafluorodecyltrichlorosilane is a hydrophobic material forming a plain film having a surface with water contact angle of about 114°. Providing the pentafluorodecyltrichlorosilane on a roughened surface or surface deposited with nanoparticles, obtains a coating with super hydrophobic surface having water contact angle of about 150°.

### EXAMPLE

Fluid tanks each having two parallel conductive plates are prepared. Fluid tank A includes a polypropylene housing without an interior surface coating and is filled with water to represent as control for evaluation. Fluid tank B is similar with fluid tank A but being filled with ink to represent as comparative example for evaluation. Fluid tank C includes a polypropylene housing, and an interior surface coating comprising aluminum oxide nanoparticles and perfluorodecyltrichlorosilane oligomer formed according to the surface coating method illustrated in Figure 4. This fluid tank C is filled with ink for evaluation.

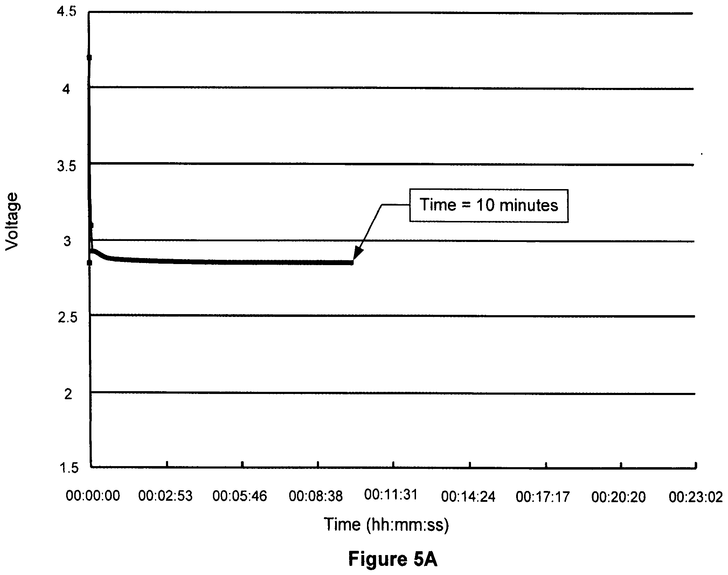

In the evaluation, the conductive plates of the fluid tanks filled with fluids are attached to a volt meter. The voltage readings before and after agitating the fluid tanks are then recorded as a function of time to track the fluid settling response time for each fluid tanks. Figure 5A shows the water settling response time in fluid tank A which includes polypropylene housing without interior surface coating. As illustrated in Figure 5A, after 10 minutes of settling, the voltage reading is already less than 0.23% of the initial reading (before agitation). This indicates that water, having a contact angle of about 85° to 92° to the polypropylene tank surface, easily rolls off from the tank surface and settles down after agitation. This fluid interaction with the tank surface, as shown in Figure 5A, allows a quickly responsive and accurate fluid level measurement system.

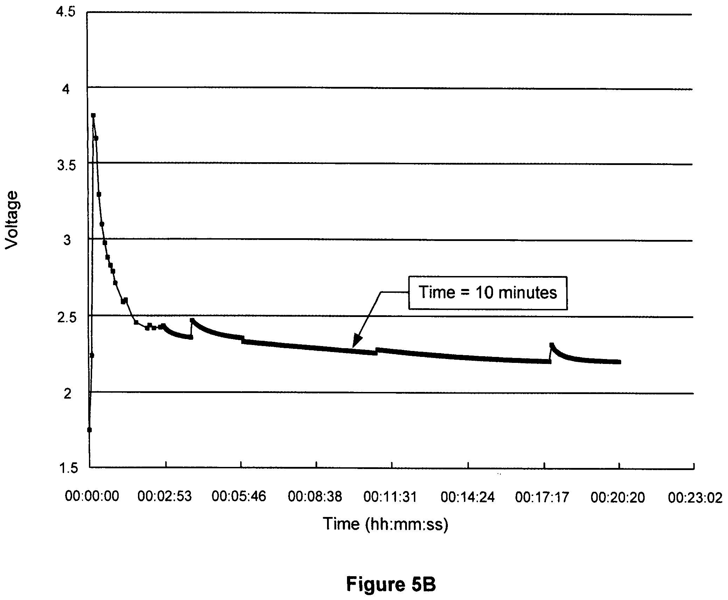

Figure 5B shows ink settling response time in fluid tank B which includes polypropylene housing without interior surface coating. As illustrated in Figure 5B, after ten minutes of settling, the voltage reading is still at 30% of the initial reading. This indicates that the ink does not easily roll off from the polypropylene tank surface. The ink tends to cling and adhere to the polypropylene tank surface having a water contact angle of about 85° to about 92°. This interaction of the ink with the tank surface, as shown in Figure 5B, adversely affect the responsiveness and accuracy of the fluid level measurement system.

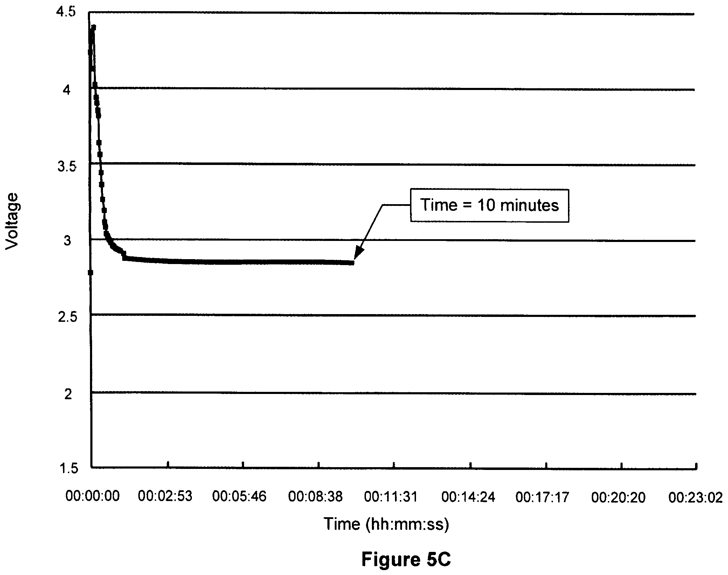

Figure 5C shows ink settling response time of fluid tank C which includes polypropylene housing with the interior surface coating according to one of the example embodiment. As illustrated in Figure 5C, after ten minutes of settling, the voltage reading reaches less than 2.4% of the initial reading. This ink settling response time of fluid tank C is more improved than that of fluid tank B, and comparable with water setting response time in fluid tank A. The interior surface coating provides the fluid tank with highly hydrophobic interior surface, thus increasing water contact angle of the interior surface to about 140° and allowing the ink to easily roll off. This interaction of the ink with the tank interior surface, as shown in Figure 5C, provides a quick and accurate response to the fluid level measurement system.

The foregoing description illustrates various aspects of the present disclosure. It is not intended to be exhaustive. Rather, it is chosen to illustrate the principles of the present disclosure and its practical application to enable one of ordinary skill in the art to utilize the present disclosure, including its various modifications that naturally follow. All modifications and variations are contemplated within the scope of the present disclosure as determined by the appended claims. Relatively apparent modifications include combining one or more features of various embodiments with features of other embodiments.

## Claims

1. A fluid tank comprising:
a plastic housing with an interior surface coating; and
at least one pair of opposed sensing elements disposed in the plastic housing to detect a fluid level;
the interior surface coating including:
nanoparticles including metal oxides; and
hydrophobic material including organic silanes, and that coats or
encapsulates the nanoparticles,
wherein the interior surface coating has a highly hydrophobic to super hydrophobic surface with water contact angle of greater than 120° and surface energy of less than 20 mJ/m².

2. The fluid tank of claim 1, wherein the nanoparticles have particle sizes ranging from about 5 to about 100 nanometers.

3. The fluid tank of claim 1, wherein the organic silanes comprise perfluorodecyltrichlorosilane, perfluorooctyltrichlorosilane, nonofluorohexyltrichlorosilane, pentafluorophenyltrichlorosilane, n-Octyltrichlorosilane, pentafluorodecyltrichlorosilane, or combinations thereof.

4. A method for preparing a surface coating of a fluid tank comprising:
providing a housing of the fluid tank;
disposing at least one pair of opposed sensing elements in the housing for detecting a fluid level;
depositing nanoparticles including metal oxides on surface of the housing, the nanoparticles being formed through a gas phase reaction before being deposited on the surface of the housing; and
encapsulating the nanoparticles with a hydrophobic material including organic silanes through chemical vapor deposition,
wherein the surface coating has a highly hydrophobic to super hydrophobic surface with water contact angle of greater than about 120° and surface energy of less than about 20 mJ/m².

5. The method of claim 4, wherein the nanoparticles have particle sizes ranging from about 5 nm to about 100 nm.

6. The method of claim 4, wherein the organic silanes comprise perfluorodecyltrichlorosilane, perfluorooctyltrichlorosilane, nonofluorohexyltrichlorosilane, pentafluorophenyltrichlorosilane, n-Octyltrichlorosilane, pentafluorodecyltrichlorosilane, or combinations thereof.

## Patentansprüche

1. Fluidtank, umfassend:
ein Kunststoffgehäuse mit einer Innenflächenbeschichtung; und
zumindest einem Paar gegenüberliegender Erfassungselemente, die in dem Kunststoffgehäuse angeordnet sind, um einen Fluidpegel zu detektieren;
wobei die Innenflächenbeschichtung umfasst:
Nanopartikel, die Metalloxide aufweisen; und
hydrophobes Material, das organische Silane aufweist und das die Nanopartikel beschichtet oder kapselt,
wobei die Innenflächenbeschichtung eine stark hydrophobe bis superhydrophobe Oberfläche mit einem Wasserkontaktwinkel von größer als 120° und einer Oberflächenenergie von weniger als 20 mJ/m² aufweist.

2. Fluidtank nach Anspruch 1, wobei die Nanopartikel Partikelgrößen im Bereich von etwa 5 bis etwa 100 Nanometer aufweisen.

3. Fluidtank nach Anspruch 1, wobei die organischen Silane Perfluorodecyltrichlorosilan, Perfluorooctyltrichlorosilan, Nonofluorohexyltrichlorosilan, Pentafluorophenyltrichlorosilan, n-Octyltrichlorosilan, Pentafluorodecyltrichlorosilan oder Kombinationen daraus umfassen.

4. Verfahren zum Herstellen einer Oberflächenbeschichtung eines Fluidtanks, umfassend:
Bereitstellen eines Gehäuses des Fluidtanks;
Anordnen zumindest eines Paars gegenüberliegender Erfassungselemente in dem Gehäuse zur Detektion eines Fluidpegels;
Abscheiden von Nanopartikeln, die Metalloxide aufweisen, an der Oberfläche des Gehäuses, wobei die Nanopartikel durch eine Gasphasenreaktion vor einer Abscheidung an der Oberfläche des Gehäuses gebildet werden; und
Kapseln der Nanopartikel mit einem hydrophoben Material, das organische Silane aufweist, durch chemische Abscheidung aus der Dampfphase,
wobei die Oberflächenbeschichtung eine stark hydrophobe bis superhydrophobe Oberfläche mit einem Wasserkontaktwinkel von größer als etwa 120° und einer Oberflächenenergie von kleiner als etwa 20 mJ/m² aufweist.

5. Verfahren nach Anspruch 4, wobei die Nanopartikel Partikelgrößen im Bereich von etwa 5 nm bis etwa 100 nm aufweisen.

6. Verfahren nach Anspruch 4, wobei die organischen Silane Perfluorodecyltrichlorosilan, Perfluorooctyltrichlorosilan, Nonofluorohexyltrichlorosilan, Pentafluorophenyltrichlorosilan, n-Octyltrichlorosilan, Pentafluorodecyltrichlorosilan oder Kombinationen daraus umfassen.

## Revendications

1. Réservoir de fluide comprenant :
un carter plastique avec un revêtement de surface intérieure ; et
au moins une paire d'éléments capteurs opposés disposés dans le carter plastique pour détecter un niveau de fluide ;
le revêtement de surface intérieure comprenant :
des nanoparticles comprenant des oxydes métalliques ; et
un matériau hydrophobe comprenant des silanes organiques, qui revêt ou encapsule les nanoparticules,
dans lequel le revêtement de surface intérieure a une surface hydrophobe à super-hydrophobe dotée d'un angle de contact avec l'eau supérieur à 120° et d'une énergie de surface inférieure à 20 mJ/m².

2. Réservoir de fluide selon la revendication 1, dans lequel les nanoparticules ont des granulométries situées dans la plage allant d'environ 5 à environ 100 nanomètres.

3. Réservoir de fluide selon la revendication 1, dans lequel les silanes organiques comprennent du perfluoro-décyltrichlorosilane, du perfluorooctyltrichlorosilane, du nonafluorohexyltrichlorosilane, du pentafluorophényltrichlorosilane, du n-octyltrichlorosilane, du pentafluorodécyltrichlorosilane, ou des combinaisons de ceux-ci.

4. Procédé pour préparer un revêtement de surface d'un réservoir de fluide, comprenant les opérations suivantes :
disposer d'un carter du réservoir de fluide ;
placer au moins une paire d'éléments capteurs opposés dans le carter pour détecter un niveau de fluide ;
déposer des nanoparticules comprenant des oxydes métalliques sur la surface du boîtier, les nanoparticules étant formées par l'intermédiaire d'une réaction en phase gazeuse avant d'être déposées sur la surface du boîtier ; et
encapsuler les nanoparticules avec un matériau hydrophobe comprenant des silanes organiques par l'intermédiaire d'un dépôt de vapeur par procédé chimique,
dans lequel le revêtement de surface intérieure a une surface très hydrophobe à super-hydrophobe dotée d'un angle de contact avec l'eau supérieur à 120° et d'une énergie de surface inférieure à 20 mJ/m².

5. Procédé selon la revendication 4, dans lequel les nanoparticules ont des granulométries situées dans la plage allant d'environ 5 nm à environ 100 nm.

6. Procédé selon la revendication 4, dans lequel les silanes organiques comprennent du perfluorodécyltrichlorosilane, du perfluorooctyltrichlorosilane, du nonafluorohexyltrichlorosilane, du pentafluorophényltrichlorosilane, du n-octyltrichlorosilane, du pentafluorodécyltrichlorosilane, ou des combinaisons de ceux-ci.
